# FASCICULE DE BREVET EUROPEEN

(11) **EP 1 231 131 B1**
(45) Date de publication et mention de la délivrance du brevet: **14.01.2009**
(21) Numéro de dépôt: 02290305.8
(22) Date de dépôt: 07.02.2002
(51) Int. Cl.: B62D 25/08

(54) **Face avant technique de véhicule automobile munie d'un moyen de liaison à une poutre basse et ensemble constitué par une face avant technique et sa poutre basse**
Kraftfahrzeugfrontendmodul mit Verbindungselement zu einem unteren Querträger und Baugruppe aus Frontendmodul und seinem unteren Querträger
Front-end module for a motor vehicle with a linking element to a lower girder, unit formed by front-end module and lower girder

(30) Priorité: 07.02.2001 FR 0101650
(43) Date de publication de la demande: 14.08.2002
(73) Titulaire: COMPAGNIE PLASTIC OMNIUM, 69007 Lyon (FR)
(72) Inventeur: Barbier, Pascal, 01100 Oyonnax (FR); Cheron, Hugues, 01800 Bourg Saint Christophe (FR); Decker, Laurent, 69100 Villeurbanne (FR); Malteste, Stephane, 01800 Meximieux (FR); Rochon, Cyrille, 01100 Oyonnax (FR)
(74) Mandataire: Remy, Vincent Noel Paul

(56) Documents cités:
- EP-A- 0 908 374
- EP-A- 1 060 976
- WO-A-01/00478
- WO-A-99/21748
- DE-A- 4 229 945
- DE-A- 10 105 562
- FR-A- 2 791 628

## Description

La présente invention concerne une face avant technique de véhicule automobile munie d'un moyen de liaison à une poutre basse et un ensemble constitué par une face avant technique et sa poutre basse.

Il est connu de placer une poutre basse à l'avant des véhicule en prévision notamment des chocs piétons et autres chocs plus diversifiés, dont la composante basse est traitée par cette poutre basse.

Pour remplir correctement sa fonction, la poutre basse est de préférence reliée à des éléments de structure du véhicule. Sa fixation auxdits éléments de structure peut intervenir soit lors du ferrage, soit peu avant le montage du pare-chocs.

Dans les deux cas, la poutre est directement solidarisée à la structure du véhicule et son positionnement par rapport à la carrosserie est insuffisamment précis pour respecter les tolérances d'assemblage usuelles des éléments visibles de carrosserie.

Par conséquent, la poutre ainsi fixée ne peut être utilisée comme référence pour le positionnement d'une pièce visible, notamment selon la direction verticale.

Pour obtenir un positionnement précis, une possibilité de fixation de la poutre basse consiste à l'intégrer au pare-chocs assemblé. Si le pare-chocs est correctement positionné par rapport aux autres pièces de carrosserie, ce qui est généralement le cas, on peut alors considérer que la poutre basse est convenablement positionnée, en Z et/ou en Y.

Mais dans ce cas, le poids de la poutre basse implique de renforcer le pare-chocs et il en résulte un surcoût ainsi qu'une augmentation de poids indésirables du véhicule.

La présente invention vise à fournir une solution de montage de la poutre basse sur le véhicule, assurant un positionnement précis de ladite poutre basse par rapport aux parties visibles de la carrosserie, notamment suivant la direction verticale.

La présente invention a pour objet une face avant technique de véhicule automobile, selon la revendication 1.

L'invention cherche à tirer profit du fait que la face avant technique est correctement référencée en Z par rapport à la carrosserie du véhicule, puisqu'elle en constitue un des supports. Par conséquent, grâce au moyen de liaison rigide en Z, la poutre basse se trouve également correctement référencée en Z.

L'homme du métier trouvera dans l'état de la technique différentes solutions pour positionner convenablement une face avant technique dans la direction verticale par rapport aux pièces de carrosserie du véhicule. Par exemple, un positionnement par rapport aux ailes peut être obtenu grâce à des appuis d'une traverse supérieure de la face avant technique sur des doublures d'ailes.

Le fait de positionner correctement la poutre basse dans la direction verticale entraîne deux conséquences. Tout d'abord, on peut utiliser la poutre basse pour mettre des éléments visibles de la carrosserie en référence selon la direction verticale Z. De plus, on peut utiliser ladite poutre basse comme support de certains éléments traditionnellement montés sur la face avant technique.

Par exemple, on peut fixer le bas d'un pare-chocs directement sur la poutre basse. Non seulement le bas du pare-chocs est ainsi correctement positionné en Z, mais en outre il bénéficie d'un soutien qui lui permet en particulier de mieux résister à l'ensoleillement. On peut en outre, grâce à ce soutien, utiliser un pare-chocs dont les parois sont plus minces.

Une autre possibilité résultant du positionnement correct de la poutre basse est d'utiliser cette dernière comme support de composants tels que des antibrouillards, en prévoyant sur celle-ci des aménagements pour recevoir ces composants.

La face avant technique comporte deux jambages verticaux bordant une partie centrale de réception d'un module de refroidissement. Ces jambages peuvent constituer, par un prolongement vers le bas de chacun d'eux, le moyen de liaison rigide en Z de la face avant technique selon l'invention.

Avantageusement, le moyen de liaison rigide en Z sert de support unique à la poutre basse. Les chocs subis par la poutre basse sont donc repris par ce moyen de liaison et il est inutile de prévoir des appuis en arrière de la poutre basse pour assurer la reprise d'efforts en cas de chocs, tels que des longeronnets issus par exemple du berceau moteur.

Afin de limiter la reprise d'efforts et leur transmission aux moyens de fixation de la face avant technique sur le véhicule, un premier mode de réalisation de l'invention consiste à intercaler, entre la poutre basse et le moyen de liaison rigide, une zone fusible qui s'autodétruit dès que l'effort à transmettre devient assez important pour endommager la face avant technique ou ses moyens de fixation au véhicule.

Dans un deuxième mode de réalisation de l'invention, le moyen rigide en Z reliant la poutre basse à la face avant technique est assujetti à la poutre basse par des moyens de fixation fusibles qui ont le même rôle que précédemment décrit, à savoir éviter une reprise par la face avant technique des efforts trop élevés, afin de préserver cette dernière et ses moyens de fixation au véhicule.

Un avantage supplémentaire résultant de l'intégration de la poutre basse dans la face avant technique est que de nouvelles fonctions, traditionnellement externes à une face avant technique, peuvent être incorporées à la face avant technique selon l'invention.

C'est ainsi qu'un passage d'air de refroidissement des freins ménagé dans la poutre basse peut être apporté sur le véhicule lors du montage de la face avant technique.

C'est ainsi également qu'un spoiler rétractable peut-être monté sur la face avant technique en étant fixé sur la poutre basse, laquelle constitue, du fait de sa rigidité, un support idéal pour un tel spoiler.

De même, l'écoulement d'air sous le véhicule peut être amélioré grâce à un muret vertical rigide disposé transversalement au véhicule en saillie de la face inférieure de la poutre basse. Un tel muret remplace avantageusement un spoiler fixe.

La position du muret dans la direction longitudinale du véhicule permet d'éviter un trottoir ou une rampe de parking. Avec un spoiler fixe, le risque de détérioration par contact avec un trottoir ou une rampe de parking ne peut être résolu qu'en utilisant des matériaux souples, ce qui rend un tel spoiler fixe beaucoup plus onéreux que le muret vertical rigide de l'invention.

L'invention a également pour objet un ensemble constitué par une face avant technique telle que décrite ci-dessus et par la poutre basse assujettie à son moyen de liaison rigide en Z.

Afin de faciliter la compréhension de l'invention, des modes de réalisation vont maintenant en être décrits à l'aide des dessins annexés dans lesquels :
- la figure 1 est une vue en perspective d'une partie gauche d'une face avant technique selon un mode de réalisation de l'invention, présentée devant le châssis d'un véhicule,
- la figure 2 est une vue analogue à la figure 1 montrant, en outre, un module de refroidissement central complétant la face avant technique en cours d'assemblage,
- la figure 3 est une vue analogue aux précédentes, d'une face avant technique selon un autre mode de réalisation de l'invention,
- la figure 4 est une section selon IV-IV de la figure 3 après montage de la poutre basse sur la face avant technique.

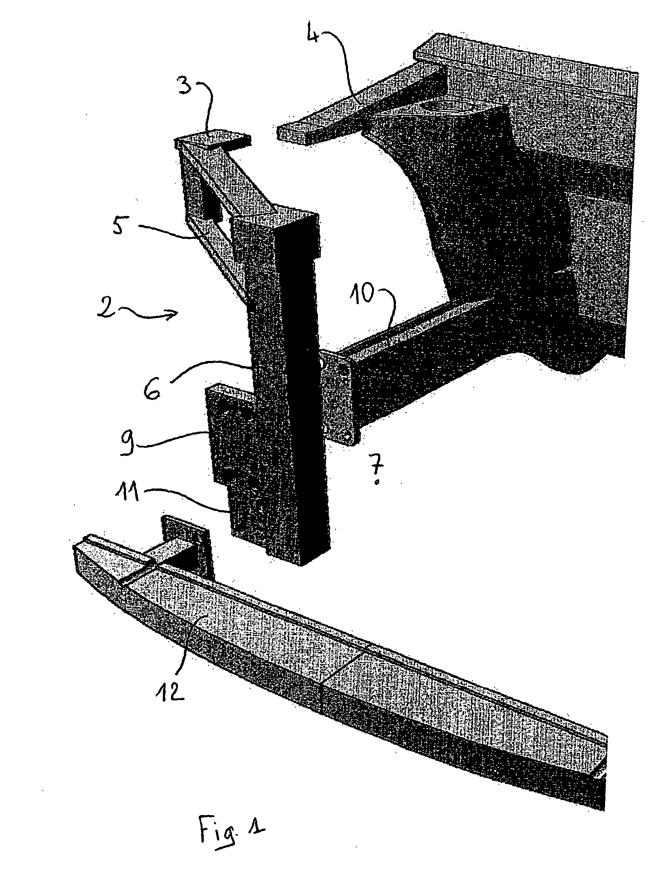

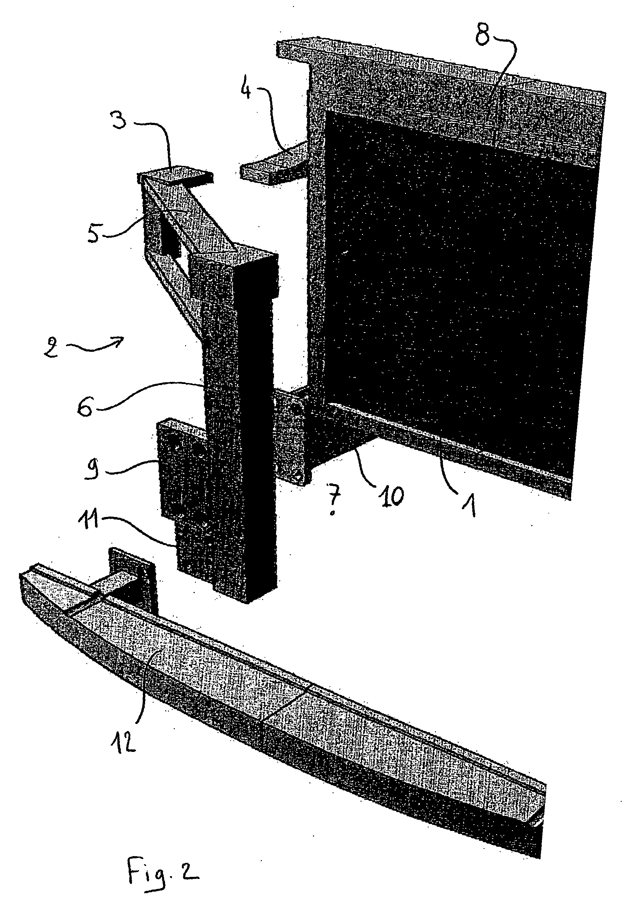

La face avant technique représentée sur les figures 1 et 2 est du type constitué de trois parties, à savoir une partie centrale formée par un module de refroidissement 1 et deux parties latérales 2 venant se fixer au châssis du véhicule et auxquelles le module de refroidissement 1 central vient se raccorder pour constituer la face avant technique dans son ensemble.

La fixation des parties latérales 2 sur le châssis est connue de l'homme du métier et ne sera pas détaillée dans le cadre de la présente description. Pour fixer les idées, on précise simplement que chaque partie latérale 2 comprend une patte de fixation supérieure 3 dirigée vers l'arrière et destinée à se solidariser à un support de doublure d'aile 4.

Dans l'exemple décrit, chaque partie latérale 2 est constituée par un cadre 5, qui est agencé pour accueillir un bloc optique (non représenté), et un jambage vertical 6 qui borde un espace central 7 de la face avant technique, destiné à loger le module de refroidissement 1, visible sur la figure 2.

Bien que représenté ici schématiquement par un cylindre de section carrée, le jambage vertical 6 peut prendre différentes formes, notamment des formes non cylindriques de section transversale non constante.

Chaque jambage vertical 6 s'étend depuis le bord supérieur de la face avant technique, qui est ici une traverse supérieure 8 appartenant au module de refroidissement, jusqu'en dessous des longerons du véhicule, c'est-à-dire plus bas que l'emplacement d'une poutre de chocs (non représentée).

L'emplacement de la poutre de chocs est matérialisé par une platine de fixation 9 solidaire du jambage 6, comprenant une face avant recevant ladite poutre de chocs et une face arrière à laquelle le longeron correspondant 10 du châssis du véhicule vient se fixer. Ainsi, après montage, la platine de fixation 9 est prise en sandwich entre la poutre de chocs et le longeron 10.

De manière classique, la face avant technique se retrouve fixée sur le véhicule par ses pattes de fixation supérieures 3, qui sont assujetties aux supports de doublures d'ailes 4, et par les platines de fixation 9 de la poutre de chocs, solidarisées aux longerons 10.

La partie de chaque jambage vertical 6 située en dessous de la platine de fixation 9 supporte une deuxième platine de fixation 11, désignée dans la suite platine basse, pour un poutre basse 12 située sous la poutre de chocs et servant notamment, comme cela est connu, à traîter les chocs piétons.

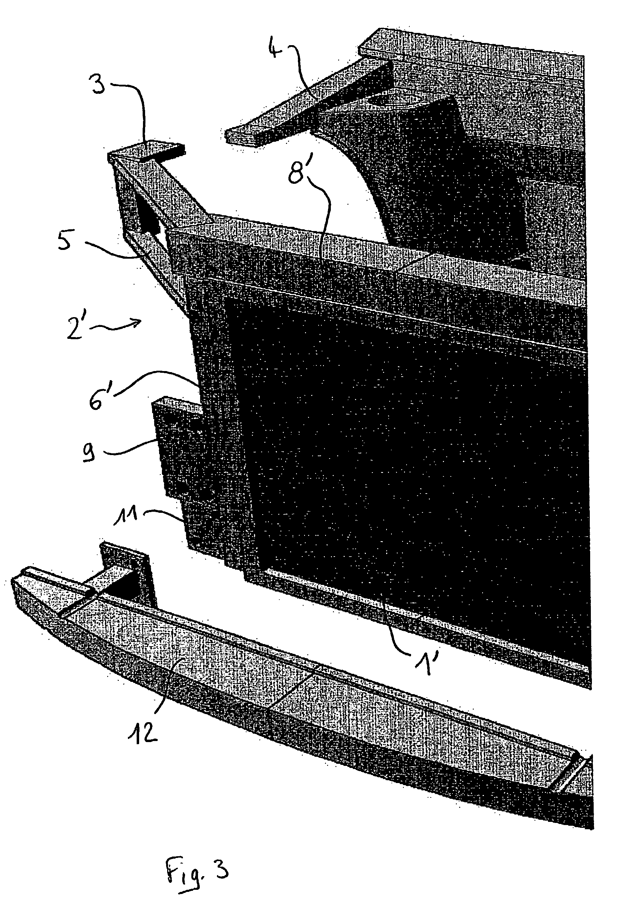

Le mode de réalisation de la figure 3 ne se distingue du précédent que par la composition de la face avant technique, qui n'est plus constituée de trois parties, mais se présente d'un seul tenant, avant sa partie centrale 1' contenant les éléments de refroidissement composant le module de refroidissement précédemment décrit, est ses deux parties latérales 2' bordant la partie centrale 1'.

Dans ce cas, les jambages 6' sont solidaires de la partie centrale 1' et de la traverse supérieure 8' mais présentent toujours les mêmes platines de fixation 9 et 11.

Les autres parties des figures 1 et 2 se retrouvant à l'identique sur la figure 3 portent les mêmes numéros de référence.

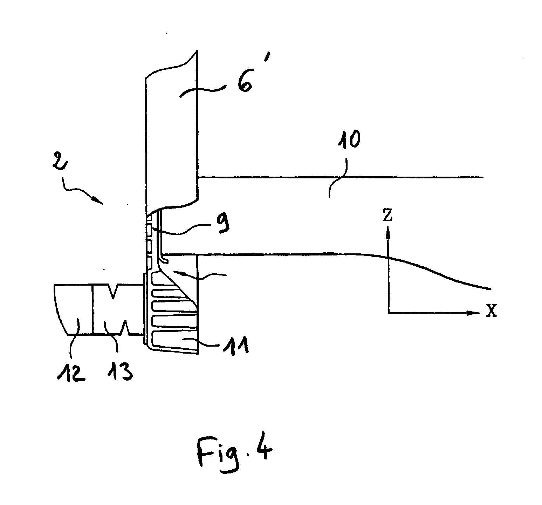

Sur la vue en coupe de la figure 4, on voit une exemple de structure de la platine recevant la poutre de chocs et de la platine basse 11 recevant la poutre basse. On voit que contrairement à la platine de fixation 9 de la poutre de chocs, qui, prise en sandwich entre ladite poutre de chocs et le longeron 10, doit essentiellement résister à des contraintes axiales de compression et présente un faible nervurage de renfort, la platine basse 11 est davantage renforcée de manière à résister aux efforts de torsions qu'elle peut subir en cas de choc, du fait de son porte-à-faux.

La platine basse 11 est ainsi renforcée pour pouvoir résister aux contraintes issues des chocs. Toutefois, afin d'atténuer les effets d'une reprise intégrale des chocs les plus violents par la face avant technique, on prévoit une zone fusible 13 entre la poute basse 12 et sa platine de fixation 11.

Dans une variante non représentée, aucune zone fusible n'est prévue mais la poutre basse est reliée à la face avant technique par un moyen de fixation fusible.

L'invention n'est aucunement limitée aux modes de réalisation décrits ci-dessus, lesquels ne sont fournis qu'à titre d'exemples. La portée de l'invention est définie par les revendications annexées.

## Revendications

1. Face avant technique de véhicule automobile comportant des moyens de fixation (3) assurant sa mise en référence selon la direction verticale Z par rapport à la carrosserie du véhicule et un moyen de liaison (6,6') s'étendant plus bas que l'emplacement d'une poutre de chocs et destiné à être assujetti à une poutre basse (12) servant à traiter les chocs piéton et située sous la poutre de chocs, ce moyen de liaison (6,6') étant tel que la poutre basse (12) se trouve également mise en référence selon la direction verticale Z par rapport à la carrosserie, **caractérisée en ce qu'**elle comporte deux jambages verticaux (6,6') bordant une partie centrale (7) de réception d'un module de refroidissement (1,1') et **en ce que** ces jambages constituent, par un prolongement vers le bas de chacun d'eux, le moyen de liaison de la face avant technique selon l'invention.

2. Face avant technique selon la revendication 1, **caractérisée en ce que** le moyen de liaison (6,6') sert de support unique à la poutre basse.

3. Face avant technique selon la revendication 1 ou 2, **caractérisée en ce qu'**elle comprend, entre la poutre basse (12) et le moyen de liaison rigide (6'), une zone fusible (13) qui s'autodétruit dès que l'effort à transmettre devient assez important pour endommager la face avant technique ou ses moyens de fixation au véhicule.

4. Face avant technique selon l'une quelconque des revendications 1 à 3, **caractérisée en ce que** le moyen (6,6') reliant la poutre basse (12) à la face avant technique est assujetti à la poutre basse par des moyens de fixation fusibles qui ont pour rôle d'éviter une reprise par la face avant technique des efforts trop élevés, afin de préserver cette dernière et ses moyens de fixation au véhicule.

5. Face avant technique selon l'une quelconque des revendications 1 à 4, **caractérisée en ce qu'**un passage d'air de refroidissement des freins est ménagé dans la poutre basse.

6. Face avant technique selon l'une quelconque des revendications 1 à 5, **caractérisée en ce qu'**un spoiler rétractable est monté sur la face avant technique en étant fixé sur la poutre basse.

7. Face avant technique selon l'une quelconque des revendications 1 à 6, **caractérisée en ce qu'**elle comporte des aménagements pour supporter des composants.

8. Ensemble constitué par une face avant technique selon l'une quelconque des revendications 1 à 7 et la poutre basse assujettie à son moyen de liaison.

## Claims

1. A motor vehicle front panel including fastener means (3) enabling it to be put into a reference position along the vertical direction Z relative to the bodywork of the vehicle, and connection means (6, 6') extending lower than the location of an impact beam and designed to be secured to a low beam (12) for handling pedestrian impacts and situated beneath the impact beam, the connection means (6, 6') being such that the low beam (12) is also put into a reference position along the vertical direction Z relative to the bodywork, the panel being **characterized in that** it includes two vertical legs (6, 6') bordering a central portion (7) for receiving a cooling module (1, 1'), and **in that** by being extended vertically downwards, said legs constitute the connection means of the front panel of the invention.

2. A front panel according to claim 1, **characterized in that** the connection means (6, 6') serve as the sole support for the low beam.

3. A front panel according to claim 1 or claim 2, **characterized in that** it includes, between the low beam (12) and the rigid connection means (6'), a fused zone (13) that self-destructs once the force to be transmitted becomes sufficient to damage the front panel or its means fastening it to the vehicle.

4. A front panel according to any one of claims 1 to 3, **characterized in that** the means (6, 6') connecting the low beam (12) to the front panel are secured to the low beam via fusible fastener means that serve to avoid the front panel taking up forces that are too great, so as to preserve the front panel and the means fastening it to the vehicle.

5. A front panel according to any one of claims 1 to 4, **characterized in that** a passage for brake cooling air is provided in the low beam.

6. A front panel according to any one of claims 1 to 5, **characterized in that** a retractable spoiler is mounted on the front panel by being fastened to the low beam.

7. A front panel according to any one of claims 1 to 6, **characterized in that** it includes arrangements for supporting components.

8. An assembly constituted by a front panel according to any one of claims 1 to 7 and a low beam secured to its connection means.

## Patentansprüche

1. Technisches Vorderteil eines Kraftfahrzeugs, das Mittel zur Befestigung (3) umfasst, die sein Ausrichten in der senkrechten Richtung Z zur Karosserie des Fahrzeugs gewährleisten, und ein Mittel zur Verbindung (6, 6') umfasst, das sich tiefer als die Position eines Stoßstangenträgers erstreckt und dazu bestimmt ist, an einem unteren Träger (12) befestigt zu werden, der zum Aufnehmen eines Fußgängeraufpralls dient und sich unter dem Stoßstangenträger befindet, wobei dieses Mittel zur Verbindung (6, 6') so beschaffen ist, dass der untere Träger (12) ebenfalls in der senkrechten Richtung Z zur Karosserie ausgerichtet ist, **dadurch gekennzeichnet, dass** es zwei senkrechte Ständer (6, 6') umfasst, die einen zentralen Teil (7) zur Aufnahme eines Kühlmoduls (1, 1') umgeben, und dass diese Ständer durch eine Verlängerung zum Unterteil von jedem, das Mittel zur Verbindung des technischen Vorderteils gemäß der Erfindung darstellen.

2. Technisches Vorderteil nach Anspruch 1, **dadurch gekennzeichnet, dass** das Mittel zur Verbindung (6, 6') als einzige Stütze für den unteren Träger dient.

3. Technisches Vorderteil nach Anspruch 1 oder 2, **dadurch gekennzeichnet, dass** es zwischen dem unteren Träger (12) und dem festen Mittel zur Verbindung (6') eine Sollbruchstelle (13) umfasst, die sich selbst zerstört, sobald die zu übertragende Kraft ausreichend groß wird, um das technische Vorderteil oder seine Mittel zur Befestigung am Fahrzeug zu beschädigen.

4. Technisches Vorderteil nach einem der Ansprüche 1 bis 3, **dadurch gekennzeichnet, dass** das Mittel (6, 6') zur Verbindung des unteren Trägers (12) mit dem technischen Vorderteil am unteren Träger durch Mittel zur Befestigung mit Sollbruchstelle befestigt ist, die eine Aufnahme von zu starken Kräften durch das technische Vorderteil verhindern sollen, um das letztere und seine Mittel zur Befestigung am Fahrzeug zu schützen.

5. Technisches Vorderteil nach einem der Ansprüche 1 bis 4, **dadurch gekennzeichnet, dass** ein Luftkanal zur Kühlung der Bremsen im unteren Träger angeordnet ist.

6. Technisches Vorderteil nach einem der Ansprüche 1 bis 5, **dadurch gekennzeichnet, dass** ein versenkbarer Spoiler am technischen Vorderteil montiert ist, indem er am unteren Träger befestigt ist.

7. Technisches Vorderteil nach einem der Ansprüche 1 bis 6, **dadurch gekennzeichnet, dass** es Anordnungen zum Stützen der Bestandteile umfasst.

8. Gruppe bestehend aus einem technischen Vorderteil nach einem der Ansprüche 1 bis 7 und dem unteren Träger, der an seinem Mittel zur Verbindung befestigt ist.
